# EUROPEAN PATENT APPLICATION

(11) **EP 4 252 514 A1**
(43) Date of publication of application: **04.10.2023**
(21) Application number: 22166264.6
(22) Date of filing: 01.04.2022
(51) Int. Cl.: A01C 9/00, A01C 21/00

(54) **PLANTER FOR PLANTING SEEDLINGS AND RELATED METHOD FOR CONTOLLING THE OPERATION OF A PLANTER**

(71) Applicant: Dewulf B.V., 8331 XA Winsum (NL)
(72) Inventor: VAN ISEGHEM, Joeri, 8770 INGELMUNSTER (BE); ROZEMA, Bart-Jan, 9861 AR GROOTEGAST (NL)
(74) Representative: Hostens, Veerle

(57) **Abstract**

The invention relates to a planter (1) for planting seedlings, such as potatoes or other tuberous or bulbous plants, and a related method for controlling the operation of such planter, wherein the planter (1) comprises:
- a bunker (2) for keeping seedlings to be planted;
- a planting element (3) for planting these seedlings; and
- a feed device (11) for feeding the seedlings from the bunker (2) to the planting element (3); and
- a weight measuring device (22) for recording a weight parameter (23) of the weight of seedlings to be planted.

## Description

This invention relates to a planter for planting seedlings, such as potatoes or other tuberous or bulbous plants, comprising:
- a bunker for keeping seedlings to be planted;
- a planting element for planting these seedlings; and
- a feed device for feeding the seedlings from the bunker to the planting element.

This invention also relates to a related method for controlling the operation of such a planter.

Such a planter is usually attached to or towed behind the rear of a tractor. Alternatively, it can also be self-propelled. It comprises furrow openers for forming furrows in the ground. Seedlings are fed from the bunker to at least one said planting element. The seedlings are singulated and the planting element distributes the singulated seedlings at a desired planting distance in the furrow. Such planting element can be a cup elevator or a belt bed, etc. The furrow is thereafter filled with soil and seedlings are covered.

To this end, a planter is typically preset to plant the seedlings at a desired planting distance in order to plant a certain area with a desired amount of seedlings. An estimate is made of how many seedlings are needed to plant this certain area, with the desired planting distance. The bunker is then filled with the determined amount of seedlings.

In practice, the quantity planted on a given area often deviates from the desired amount. Various factors can play a role in this. Such seedlings have a variable size, and an average size is estimated to determine the required amount. It also happens that misses occur, with no seedling being planted at certain times, where it was intended to be. Sometimes several seedlings are planted at the same time, where only one, singulated, seedling should be planted. Depending on the resistance of the terrain, the planter may move faster or slower than planned, which also changes the planting distance.

Often additional seedlings need to be delivered to be able to plant an area completely, or after planting an area one has a surplus of seedlings. The planter is also often adjusted in between planting, for example by adjusting the set planting distance or adjusting the depth of the furrow opener, etc.

There is a need to be more flexible in responding to such circumstances. The object of the present invention is to provide a planter and a related method with which this is possible.

This object is achieved by providing a said planter with a weight measuring device for recording a weight parameter of the weight of seedlings to be planted.

Such a weight parameter can be recorded in a continuous way or at certain times. The difference between the weight parameter recorded on two different times, is then also representative for the weight of seedlings which have been planted between these two times.

Knowing this weight parameter, it is possible e.g. to react more quickly to the following issues than the prior art:
- the planting distance can be adjusted where required/desired;
- when suddenly too few kg of seedling is planted, this can be an indication that misses occur. A slide, determining the amount of seedlings leaving the bunker can be adjusted, or a trill or moving floor in the bunker can be adapted.
- when too much kg of seedlings is planted, this can be an indication that more than one seedling is planted, where only one is intended to be.
- a full bunker causes the wheels of the planter to sink deeper into the underground than an empty bunker, especially at low tyre pressures. The effective wheel diameter then changes and so does the planting distance. The number of pulses per revolution of the wheels with a full and an empty bunker can deviate 7%. Knowing the weight parameter, one can anticipate this.
- The furrow opener will also be deeper in the soil with a full bunker compared with an empty bunker. Knowing the weight parameter, one can also anticipate this.

In a preferred embodiment, the planter comprises a travelling distance measuring device for recording the travelling distance travelled with said planter and a surface-mass evaluation device for determining a surface-mass parameter of the seedlings planted over this travelling distance, based on the weight parameter and the recorded travelling distance.

Knowing this surface-mass parameter, planter settings can be adjusted even more specifically where required/desired.

After a few metres, it is possible to estimate how many kg of potatoes will be needed with the current settings of the planter. If necessary a proposal can be made or automatically executed of a setting of the planter to reach the given weight per ha. Alternatively or additionally, it can better be determined how many seedlings still need to be supplied in order to plant the area to be planted.

Recorded weight parameter and surface-mass parameter can be saved in data cards in order to adjust future settings dynamically depending on the position on the terrain.

There are various ways for carrying out a weight measuring device for recording said weight parameter. Said weight parameter can be representative for the total amount of seedlings still to be planted on the planter, or only for the amount of seedlings still present in the bunker. The weight in the bunker is most important for controlling the operation of the planter, but a weight parameter based on the total amount of seedlings allows for a more accurate controlling of the operation of the planter.

The planter can e.g. comprise a base frame, which is provided for driving the planter over a field to be planted and a subframe, which is provided with the bunker and which is mounted at several mounting points to the base frame. The weight measuring device can then comprise at least one load cell, which is provided at a said mounting point for recording the weight parameter. Determining the weight of the subframe, including the seedlings loaded thereon, by means of at least one load cell, a weight parameter representative of the weight of the seedlings loaded thereon can be recorded, as the weight of the subframe itself is known at production thereof. Even if the full weight of the subframe (including the seedlings loaded thereon) is not measured with that one load cell, this still gives an indication, which is representative and allows to determine a weight parameter based on which the planter can be controlled in an advantageous way compared to the prior art.

Not every mounting point thus needs to be provided with a load cells. It is e.g. also possible that such mounting point is realised as a hinge which does not absorb vertical forces and therefore does not need to be provided with a load cell.

It is further possible to provide one or more mounting points with a damper. One or more mounting points can also be provided with a combination of a damper and a load cell. With such damper, damage of planters is reduced and in a cup planter the risk of them falling off the planting cups is reduced.

Preferably several load cells are provided in order to obtain a more accurate weight parameter, with which the planter can more accurately be controlled. Each load cell is then provided at a said mounting point. Up to e.g. 6 load cells can be provided in this way. Still more preferably, 4 load cells are provided.

By providing a subframe, mounted at several mounting points to a base frame, it is additionally possible to provide such subframe which is mountable to different types of base frames.

Such subframe can be pre-assembled in production.

In a preferred embodiment, the subframe is provided with the planting element and the feed device, such that the weight parameter can be based on the total amount of seedlings still to be planted.

When in addition to the bunker, the planting elements are provided on the subframe and in this way mounted to the base frame, the whole can be assembled more easily as a pre-assembly group in production. This also has the advantage that maintenance work on e.g. the cutter can be carried out more easily, since the entire top of the machine can be easily dismantled.

Where the planter comprises several planting elements, the weight measuring device can alternatively comprise several weight sensors, whereby the bunker and each planting element is separately provided with such a weight sensor for recording a partial weight parameter. The weight measuring device can then comprise a calculating device for calculating the weight parameter using the recorded partial weight parameters.

Additionally or alternatively, the weight measuring device can comprise at least one volume measuring device, for recording a volume parameter of the volume of seedlings to be planted and a volume evaluation device for determining the weight parameter on the basis of this volume parameter.

When such a volume parameter is determined, and the density of the seedlings is either known or can be estimated, then a related weight parameter, representative for the weight of the seedlings to be planted can be calculated.

Volume measuring devices are e.g. used in harvesters to determine volume and mass of harvested potatoes. Similar volume measuring devices can be used in a planter according to this invention.

More specifically, the measuring device for this purpose may comprises at least one optical image capturing unit, such as a camera to record an image of the seedlings to be planted and an image evaluation device for determining the weight parameter on the basis of this recorded image. Several cameras are then preferably used in order to obtain a 3D image of the full contents of the bunker.

Alternatively, the measuring device could e.g. comprise laser scanners in order to determine said volume parameter.

There are also various ways to realise a travelling distance measuring device for recording the travelling distance.

Such travelling distance can e.g. be measured by a wheel sensor, mounted at a wheel that rolls over the surface over which the planter rides. Rotations of the wheel between two different times are counted by this wheel sensor and are multiplied by the circumference of the wheel in order to obtain the travelling distance between these two times.

The travelling distance can alternatively be determined via GPS data. An alternative method of measuring the travelling distance using GPS data is to measure the speed of the planter and to measure the time over which the planter has moved and to calculate the travelling distance based thereon.

The width of the planter is known at production and can be set in the surface-mass evaluation device. Normally this width remains the same, but if e.g. one of the planting elements is not used, this width can be adjusted accordingly. Such adjusted width is also known at production of the planter and can e.g. be set in the surface-mass evaluation device when switching off the respective planting element.

By multiplying the recorded travelling distance between said two different times by this width, the surface-mass evaluation device can determine the planted area between these two times. By dividing the difference between the weight parameters recorded on these two times by this planted area, the surface-mass parameter can be determined by the surface-mass evaluation device.

Additionally, a planter according to the invention can comprise a time measuring device for measuring a time parameter of the time over which seedlings are planted in the field is recorded.

In a preferred embodiment, the planter comprises an operating evaluation device, adjusted for generating an adjustment signal for adjusting at least one operating parameter of the planter based on the weight parameter. In this respect, the operating evaluation device can be provided for generating the adjusting parameter based on the surface-mass parameter. Additionally or alternatively, the operating evaluation device can be provided for generating the adjusting parameter based on the time parameter.

The planter preferably further comprises a control unit, adapted to control the planter, thereby adjusting the at least one operating parameter based on the adjustment signal.

The control unit may be provided to receive the operating parameter directly from the evaluation device, and to use it to control the planter directly, so that the planter is self-regulating in this way.

However, it is also possible to show the operating parameter on a monitor to the driver of the planter, who can decide whether or not to send it to the control unit to control the planter.

There are various ways to realise a said operating evaluation device, a said surface-mass evaluation device and a said control unit. They can all be part of a central control unit, similar to central control units known in existing planters, or their operation can be divided over several local control units, possibly supplemented by a central control unit, similar to control devices already known in existing planters.

The object of this invention is also achieved with a method for controlling the operation of a planter for planting seedlings, such as potatoes or other tuberous or bulbous plants, wherein the planter is driven over a field to be planted, wherein seedlings are fed from a bunker with seedlings to be planted to a planting element and planted in the field by the planting element, and wherein a weight parameter of the weight of seedlings to be planted is recorded.

Preferably, the travelling distance travelled with said planter is also recorded and a surface-mass evaluation device determines a surface-mass parameter of the seedlings planted over this travelling distance, based on the weight parameter and the recorded travelling distance.

In addition, an operating evaluation device preferably generates an adjustment signal for adjusting at least one operating parameter of the planter based on the weight parameter or on the surface-mass parameter. Additionally or alternatively, a time parameter of the time over which seedlings are planted in the field can be recorded and the operating evaluation device can generate the adjusting parameter based on the time parameter.

Still more preferably, the evaluation device generates a planting distance adjusting signal as said adjustment signal, this preferably based on the surface-mass parameter. Further preferable, the evaluation device generates a speed adjusting signal for adjusting the speed of a drive shaft of the planting element as said adjustment signal, this preferably based on the surface-mass parameter.

Alternatively or additionally, the evaluation device can generate a feed device adjusting signal for adjusting the speed of the feed device as a said adjustment signal. Further alternatively or additionally, the evaluation device can generate a slide adjusting signal, for adjusting the slide, determining the amount of seedlings leaving the bunker, or a trill or moving floor adapting signal, or a driving speed adjusting signal, or a furrow opener adjusting signal, etc.

Even more preferable, a control unit of the planter controls the planter, thereby adjusting the at least one operating parameter based on the adjustment signal.

The object of the invention is furthermore achieved by providing a computer program product, consisting of computer-readable code, which, when this code is executed on a control unit of a planter according to this invention, this produces the result that the control unit controls the operation of the planter according to a method according to the invention.

In addition, the object of the present invention is achieved by providing a non-transient machine-readable storage medium, which stores such a computer program product.

Finally, the object of the present invention is achieved by providing a method for converting a planter for planting seedlings, such as potatoes or other tuberous or bulbous plants, comprising a bunker for keeping seedlings to be planted, a planting element for planting these seedlings and a feed device for feeding the seedlings from the bunker to the planting element, wherein the planter is provided with a weight measuring device for recording a weight parameter of the weight of seedlings to be planted, in order to obtain an above described planter according to the invention.

The present invention will now be explained in more detail by means of the following detailed description of a method and a planter according to the present invention. The sole aim of this description is to give explanatory examples and to indicate further advantages and particulars of the present invention, and can thus by no means be interpreted as a limitation of the area of application of the invention or of the patent rights defined in the claims.

In this detailed description, reference numerals are used to refer to the attached drawings, in which:
- Fig. 1 shows an embodiment of a potato planter according to the invention in perspective view;
- Fig. 2 shows the connection between the base frame and the subframe of the potato planter of fig. 1 in perspective view;
- Fig. 3 shows the connection between the base frame and the subframe of the potato planter of fig. 1 in side view;
- Fig. 4 schematically shows how the potato planter of fig. 1 can be controlled with a method according to the invention;
- Fig. 5 schematically shows with an alternative embodiment of a potato planter according to the invention, which is shown in perspective view, how this potato planter can be controlled with a method according to the invention;
- Fig. 6 schematically shows with an alternative embodiment of a potato planter according to the invention, which is shown in perspective view, how this potato planter can be controlled with a method according to the invention;
- Fig. 7 shows a flow chart of a method according to the invention;
- Fig. 8 shows a flow chart for obtaining a weight parameter in a method according to the invention as illustrated in fig. 7;
- Fig. 9 shows an alternative flow chart for obtaining a weight parameter in a method according to the invention as illustrated in fig. 7;
- Fig. 10 shows a flow chart for generating an adjustment signal with an operating evaluation device in a method according to the invention as illustrated in fig. 7.

The illustrated planters (1) are potato planters. Other planters with analogue singulation and planting of seedlings, such as planters for tulip bulbs or onions or garlic can be worked out analogously.

The illustrated planters (1) all comprise a towbar (20) for connecting this planter (1) to a tractor. Alternatively, a planter (1) according to this invention could be worked out as a self-propelled planter.

Each planter (1) comprises a bunker (2) for keeping potatoes to be planted. In order to plant potatoes, this bunker (2) is filled with a predetermined amount of potatoes to be planted.

Feed devices (11) in the planter (1) are provided to feed the potatoes to be planted from the bunker (2) to one or more planting elements (3) of the planter (1).

The general structure and working of such planters (1) is known.

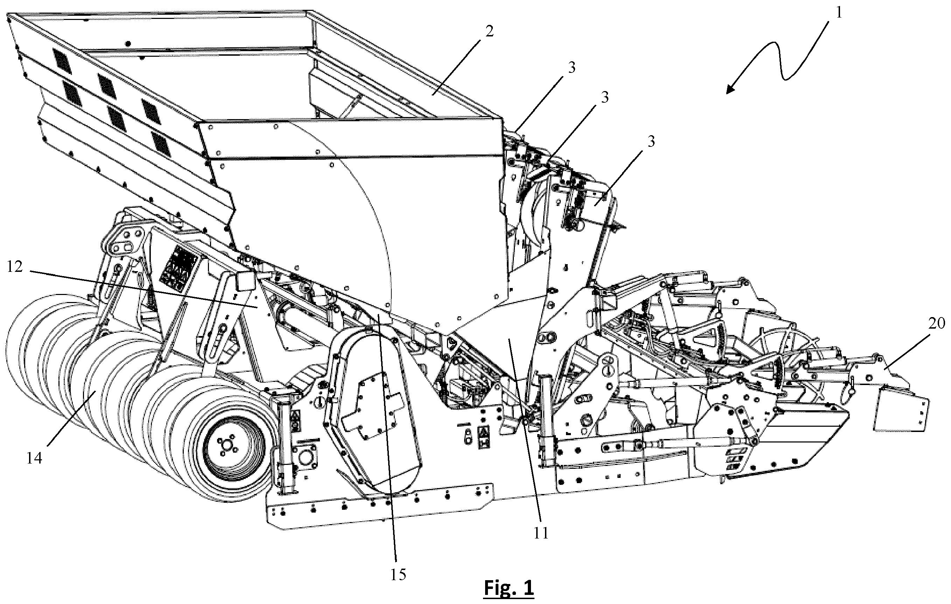

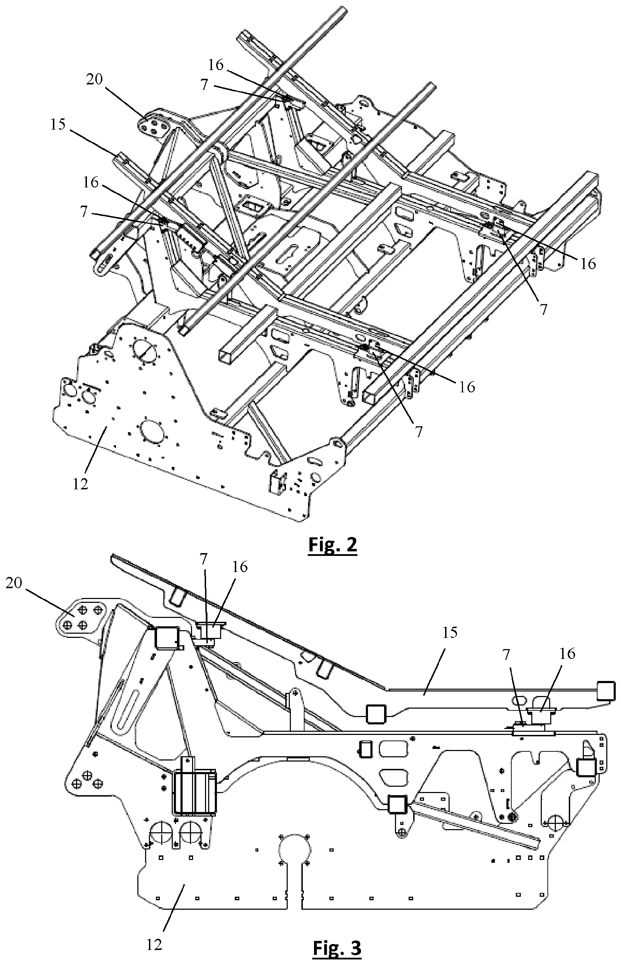

In the embodiments as illustrated in figures 1-4 and fig. 5, the planter (1) is a cup planter and comprises four cup elevators as said planting elements (3). Analogously, cup planters with more or less cup elevators can be worked out.

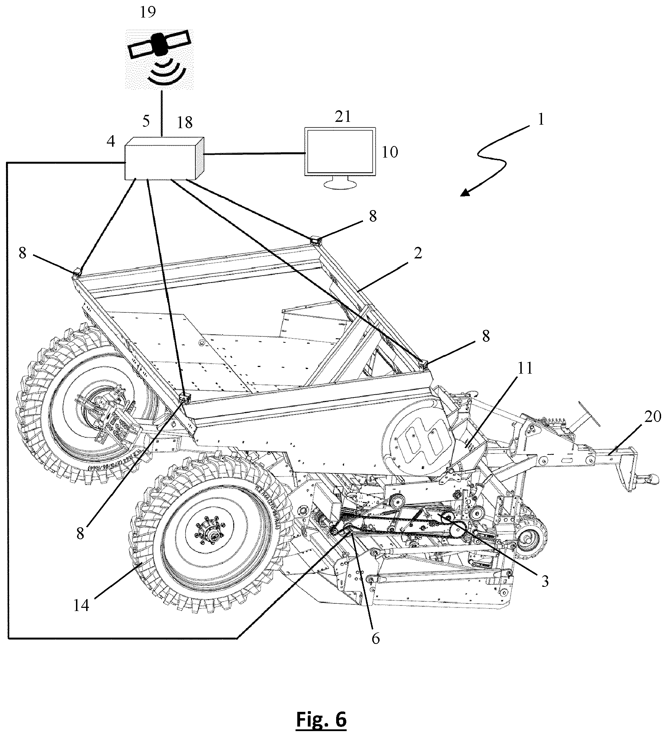

In the embodiment as illustrated in fig. 6, the planter (1) is a belt planter comprising four string beds as said planting elements (3). Analogously, belt planters with more or less string beds can be worked out.

Each of the illustrated planters (1) is according to the invention provided with a weight measuring device (22) for recording a weight parameter (23) of the weight of seedlings to be planted.

The first illustrated embodiment (see fig. 1-4) to this end comprises a base frame (12) and a subframe (15), which is mounted at four mounting points (16) to the base frame (12), this by bolting. Such a subframe (15) could alternatively be mounted to the base frame (12) at more than four mounting points (16), such as e.g. 6 mounting points (16). The subframe (15) can also be mounted in ways other than by bolting. The base frame (12) is provided with driving wheels (14) for driving the planter (1) over a field to be planted. This base frame (12) could e.g. alternatively be provided with tracks for driving the planter (1). Furthermore alternatively, the base frame (12) could be towed by a tractor and thereby be lifted completely.

The subframe (15) is provided with the bunker (2), the planting element (3) and the feed devices (11).

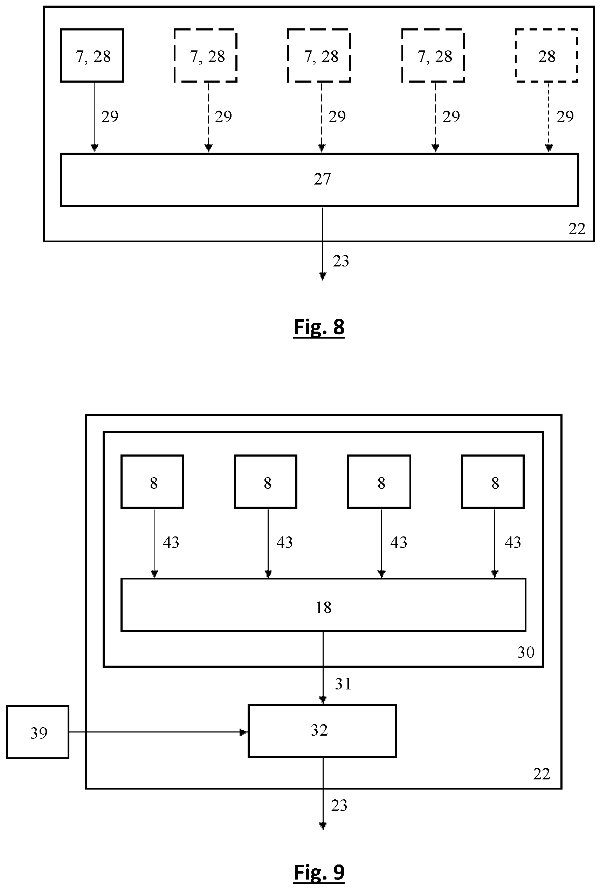

At each of the mounting points (16) a load cell (7) is provided, for recording the weight parameter (23). As illustrated in figure 8, a planter (1) according to the invention can be provided with one or more such load cells (7), each positioned at a said mounting point (16). One or more of the mounting points (16) can also be provided with a damper.

Measurement signals (29) of the one or more load cells (7) are sent to a calculating device (27), which can e.g. be part of a control unit (4) of the planter (1). This calculating device (27) then calculates a weight parameter (23) based on these measurement signals (29).

As schematically shown in figure 8, the weight measuring device (22) of a planter (1) could alternatively be provided with several weight sensors (28), whereby the bunker (2) and each planting element (3) of such planter (1) is separately provided with such a weight sensor (28). Each weight sensor (28) can then record a partial weight parameter (29) and send it to a calculating device (27) for calculating a weight parameter (23) based on such partial weight parameters (29).

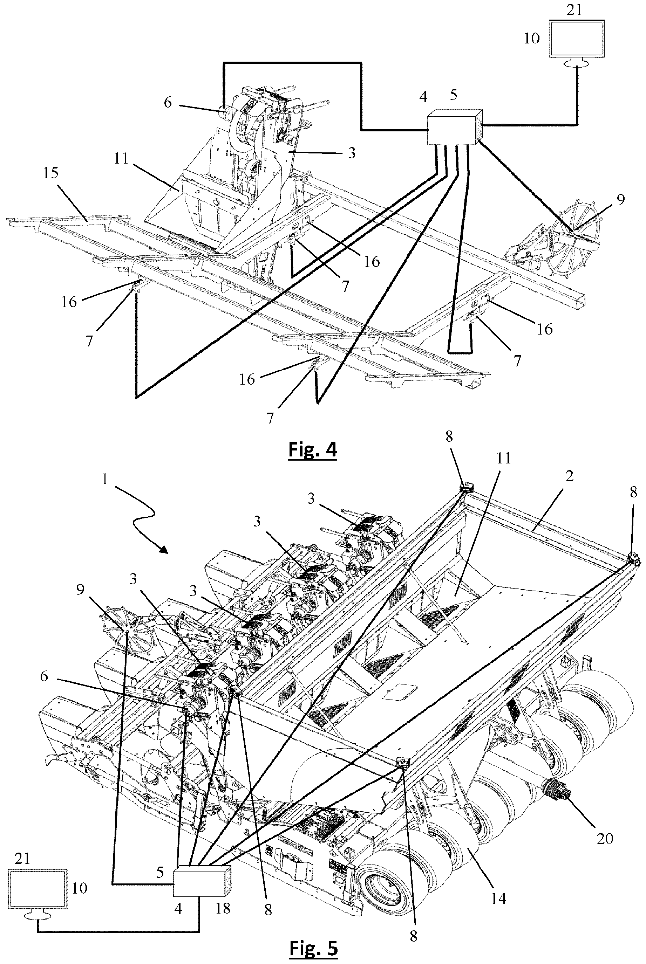

The second and third illustrated embodiment (see fig. 5 and 6) are alternatively provided with cameras (8), for recording images of the contents of the bunker (2). A 3D image of the potatoes to be planted which are inside the bunker (2) can thereby be obtained. To this end, as illustrated in figure 9, each camera (8) can send captured images (43) to an image evaluation device (18), which can e.g. be part of a control unit (4) of the planter (1). Based on these images (43), this image evaluation device (18) can determine a volume parameter (31), representative for the volume of the potatoes to be planted present in the bunker (2). The cameras (8) and the image evaluation device (18) in this respect together form a volume measuring device (30) of the planter (1). The volume parameter (31) is then sent to a volume evaluation device (32), which can determine a weight parameter (23) representative for the weight of the potatoes to be planted present in the bunker (2), e.g. based on this volume parameter (31) and a preset average size (39) and weight density of the potatoes. Such volume evaluation device (32) can e.g. be part of a control unit (4) of the planter (1).

In alternative embodiments, such a volume measuring device (30) could e.g. comprise laser scanners in order to determine a volume parameter (31).

The simplest embodiments of planters (1) according to the invention have a control unit (4), which controls the weight measuring device (22) for determining the weight parameter (23) and which displays this weight parameter (23) on a monitor (10) to the driver of the planter (1). This driver can then manually adjust the planter (1) when required and/or desired, based on this weight parameter (23), reacting to issues such as e.g. described above.

Other embodiments of planters (1) according to the invention, such as the illustrated embodiments, further comprise a travelling distance measuring device (9, 19) for determining the distance (26) over which the planter (1) is driven over a field.

In the first two illustrated embodiments (see figures 4 and 5), the planter (1) comprises a wheel sensor (9), mounted at a wheel that rolls over the field over which the planter rides. Rotations of the wheel between two different times are counted by this wheel sensor (9) and are multiplied by the circumference of the wheel in order to obtain the travelling distance (26) between these two times. Alternatively, one or more of the driving wheels (14) could be provided as such a wheel sensor for determining the travelling distance (26). Measurements of this travelling distance (26) would then however be influenced by the depth to which this driving wheel (14) sinks into the ground. Such deviations can be averaged out by averaging the results of several such sensors. Also deviating measurements in curves can be averaged out in this way. By providing an additional wheel sensor (9), which is not a driving wheel (14), a more accurate measurement can be obtained.

In the last illustrated embodiment (see figure 6), the travelling distance (26) is determined by means of GPS data (19) recorded with a GPS tracker.

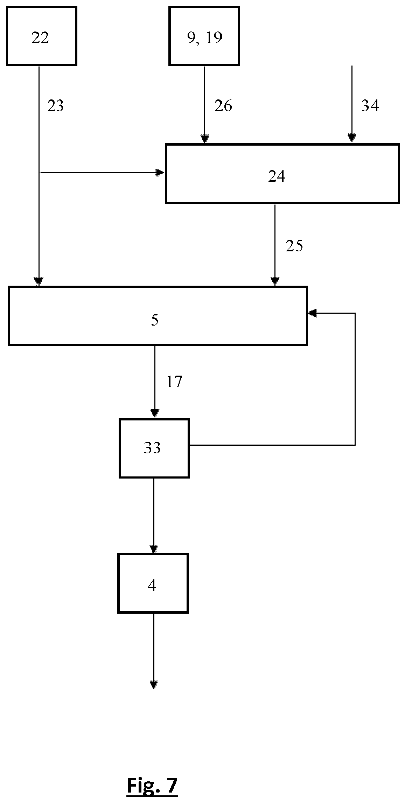

As illustrated in figure 7, a surface-mass evaluation device (24), which can e.g. be part of a control unit (4) of the planter (1), can then determine a surface-mass parameter (25) of the seedlings planted over this travelling distance (26) based on the weight parameter (23) and the recorded travelling distance (26). To this end, the width (34) of the planter (1) can be set in the surface-mass evaluation device (24) as described above and multiplied by the recorded travelling distance (26) between two different times in order to determine the planted area. By dividing the difference between the weight parameters (23) recorded on these two times by this planted area, the surface-mass parameter (25) can be determined by the surface-mass evaluation device (24).

In simple embodiments of planters (1) according to the invention this surface-mass parameter (25) can be displayed on a monitor (10) to the driver of the planter (1), e.g. by a control unit (4) of the planter (1). This driver can then manually adjust the planter (1) when required and/or desired, based on this surface-mass parameter (25), reacting to issues such as e.g. described above.

More advanced embodiments of planters (1) according to the invention, such as the illustrated embodiments, additionally comprise an operating evaluation device (5), for generating an adjustment signal (17) for adjusting at least one operating parameter (33) of the planter (1) based on the weight parameter (23) and/or on the surface-mass parameter (25).

Such adjustment signal (17) can be a speed adjusting signal (37) for adjusting the speed of a drive shaft (6) of the planting element (3), or a feed device adjusting signal for adjusting the speed of one or more of the feed devices (11), or a slide adjusting signal, for adjusting the slide, determining the amount of seedlings leaving the bunker (2), or a trill or moving floor adapting signal, or a driving speed adjusting signal, or a furrow opener adjusting signal, etc.

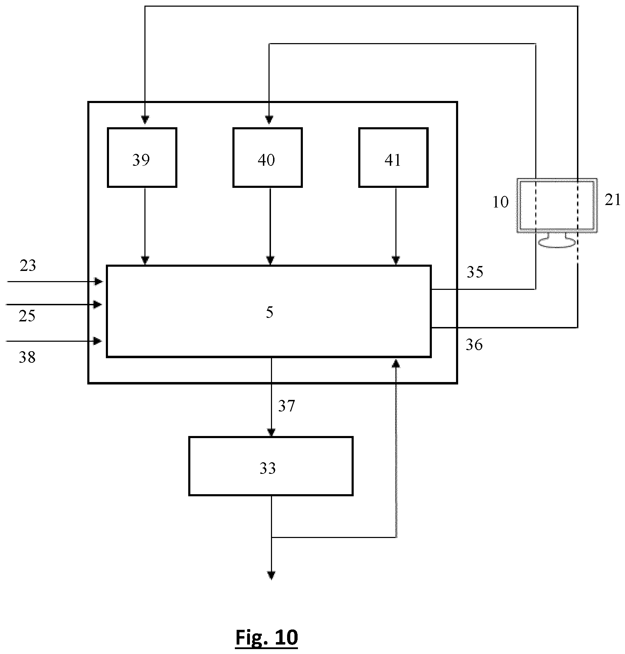

In figure 10, it is e.g. illustrated how for a belt planter (1), the operation evaluation device (5) can determine different adjustment signals (35), (36), (37) based on the weight parameter (23), the surface-mass parameter (25), possible detected missers and/or doubles (38), the average potato size (39), the set planting distance (40) and the vehicle speed (41). The average potato size (39) is a parameter which is to be set, e.g. using an input device (21). The planting distance (40) is also a parameter which is to be set, e.g. using an input device (21). The vehicle speed (41) can e.g. be obtained from the tractor with which the planter (1) is towed, or detected using GPS data (19). These parameters (39, 40, 41) are required to set the speed (33) of the drive shaft (6) of the string bed (3) as operating parameter (33).

It can for example be envisaged that with a travelling distance (26) of 1m, 5 potatoes must fall to obtain a planting distance (40) of 20 cm. If the potatoes are smaller than the set average potato size (39), more potatoes will fall in 1 m and so the actual planting distance will be smaller. The surface-mass parameter (25) will thus be below a set limit. The operation evaluation device (5) can e.g. determine a planting distance adjusting signal (35) or an average size adjusting signal (36) or both. These adjusting signals (35, 36) can be presented to the driver on a monitor (10). Alternatively or additionally, the surface-mass parameter (25) can be presented on the monitor (10). Furthermore alternatively or additionally, the weight parameter (23), possibly detected missers and/or doubles (38) (see further), the average size (39), the planting distance (40) and/or the vehicle speed (41) can be presented on the monitor (10). Based on the information received on the monitor (10), the driver can decide to adopt e.g. the planting distance adjusting signal (35) or an average size adjusting signal (36) or both, such that one of both or both adjusting signals (35, 36) are used to set a new average potato size (39) or a new planting distance (40). Taking new parameter into account, the operation evaluation device (5) will generate a speed adjusting signal (37) for adjusting the speed (33) of the drive shaft (6).

The planter (1) can additionally be provided with means (38) for detecting missers and/or doubles (i.e. two, three or more potatoes planted, where only one is intended to be). Initially, it is assumed that all potatoes are perfectly lined up in the string bed (3). However, if there are gaps between two potatoes, a miss can be detected and taken into account by the operation evaluation device (5). If two, three or more potatoes are planted, where only one is intended to be, this can also be detected and taken into account by the operation evaluation device (5). Alternatively, such detected misses or doubles (38) can be presented to the driver on the monitor (10) which takes those into account when deciding whether or not to adopt an adjustment signal (17) presented by the operating evaluation device (5). Such missers and/or doubles can be detected with known means (38) for detecting such missers or doubles, or could e.g. be derived by the operating evaluation device (5) or possibly a separate control unit (4) of the planter (1), based on the weight parameter (23).

Each illustrated planter (1) is provided with a control unit (4) for controlling the planter (1) based on several operating parameters (33). These operating parameters (33) can according to the invention be adjusted taking the adjustment signal (17) of the operating evaluation device (5) into account. The operating evaluation device (5) in this respect needs to take the currently applied operating parameter (33) into account in order to determine in how far this currently applied operating parameter (33) should be adjusted, in order to be able to determine a related adjustment signal (17).

Where the control unit (4) is provided for controlling the planter (1), the driver can use an input device (21) for sending corresponding instructions to the control unit (4) for controlling the planter (1). When e.g. the monitor (10) comprises a touch screen, such touch screen can be used as input device (21).

The control unit (4) may additionally or alternatively be provided to receive operating parameter (33) or adjusting signal (33) for adjusting such operating parameter (33) directly from the evaluation device (5), and to use it to control the planter (1) directly, so that the planter (1) is self-regulating in this way.

With planters (1) according to the invention it is possible to react more quickly to several issues than the prior art, as illustrated with the following examples:
- the monitor (10) e.g. shows a determined surface-mass parameter (25) of 4000 kg/ha. The surface still to be planted is 3 ha, so 12 tons of potatoes needed. You can decide to order a supply of 12 tons.
- the monitor (10) e.g. shows a weight parameter (23) indicating that there are 2000 kg potatoes left in your bunker (2). You can give the order via the monitor (21) to automatically adjust the planting distance (40) so that the remaining 0.5 ha still needs 1900 kg potatoes (taking 100 kg as a reserve into account).
- the surface to be planted is e.g. 10 ha and you know that there are 40 tons of potatoes available. Using the input device (21) you can instruct the planter (1) to adjust the planting distance (40) to use 40 tons in 10 ha. The operating evaluation device (5) can be programmed to actively steer the planter (1), adjusting operating parameter (33) in case this set goal would not be obtained.
- a desired surface-mass parameter of e.g. 4000 kg/ha can be pre-set. The operating evaluation device (5) can be programmed to continuously adjust the planting distance (40) in order for the determined surface-mass parameter (25) to stay around 4000 kg/ha.
- the monitor (10) e.g. shows a determined surface-mass parameter (25) of 3000 kg/ha. You can decide to increase this manually by adjusting a parameter in the monitor. In this respect, you can e.g. click on the touch screen (21) on decrease planting distance (40) so that the determined surface-mass parameter increases. Alternatively, you could e.g. adjust the speed (33) of the drive shaft (6) of the cup elevators (3).
- the monitor e.g. shows that there are 2000 kg potatoes left in your bunker (2) and that you are planting at a determined surface-mass parameter (25) of 4000 kg/ha. The operating evaluation device (5) knows the speed (33) of the drive shaft (6) of the planting element (3) and the monitor (10) shows the calculated "time until bunker empty". Based on this, you know that there is still 2 hours' time to deliver a new load when you order additional supply.

## Claims

1. Planter (1) for planting seedlings, such as potatoes or other tuberous or bulbous plants, comprising:
- a bunker (2) for keeping seedlings to be planted;
- a planting element (3) for planting these seedlings; and
- a feed device (11) for feeding the seedlings from the bunker (2) to the planting element (3);
**characterised in that** the planter (1) comprises a weight measuring device (22) for recording a weight parameter (23) of the weight of seedlings to be planted.

2. Planter (1) according to claim 1, **characterised in that** the planter (1) comprises a travelling distance measuring device (9, 19) for recording the travelling distance (26) travelled with said planter (1) and a surface-mass evaluation device (24) for determining a surface-mass parameter (25) of the seedlings planted over this travelling distance (26), based on the weight parameter (23) and the recorded travelling distance (26).

3. Planter (1) according to claim 1 or 2, **characterised in that** the planter (1) comprises an operating evaluation device (5), adjusted for generating an adjustment signal (17) for adjusting at least one operating parameter (33) of the planter (1) based on the weight parameter (23) or on the surface-mass parameter (25).

4. Planter (1) according to any of the preceding claims, **characterised in that** the planter (1) comprises a base frame (12), for driving the planter (1) over a field to be planted, a subframe (15), which is provided with the bunker (2) and which is mounted at several mounting points (16) to the base frame (12) and that the weight measuring device (22) comprises at least one load cell (7), which is provided at a said mounting point (16) for recording the weight parameter (23).

5. Planter (1) according to claim 4, **characterised in that** the subframe (15) is provided with the planting element (3) and the feed device (11).

6. Planter (1) according to any of claims 1 to 4, **characterised in that** the planter (1) comprises several planting elements (3), that the weight measuring device comprises several weight sensors (28), whereby the bunker (2) and each planting element (3) is separately provided with such a weight sensor (28) for recording a partial weight parameter (29), and that the weight measuring device (22) comprises a calculating device (27) for calculating the weight parameter (23) using the recorded partial weight parameters (29).

7. Planter (1) according to any of the preceding claims, **characterised in that** the weight measuring device (22) comprises a volume measuring device (30), for recording a volume parameter (31) of the volume of seedlings to be planted and a volume evaluation device (32) for determining the weight parameter (23) on the basis of this volume parameter (31).

8. Method for controlling the operation of a planter (1) for planting seedlings, such as potatoes or other tuberous or bulbous plants, wherein the planter (1) is driven over a field to be planted and wherein seedlings are fed from a bunker (2) with seedlings to be planted to a planting element (3) and planted in the field by the planting element (3), **characterised in that** a weight parameter (23) of the weight of seedlings to be planted is recorded.

9. Method according to claim 8, **characterised in that** the travelling distance (26) travelled with said planter (1) is recorded and a surface-mass evaluation device (24) determines a surface-mass parameter (25) of the seedlings planted over this travelling distance (26), based on the weight parameter (23) and the recorded travelling distance (26).

10. Method according to claim 9, **characterised in that** an operating evaluation device (5) generates an adjustment signal (17) for adjusting at least one operating parameter (33) of the planter (1) based on the weight parameter (23) or on the surface-mass parameter (25).

11. Method according to claim 10, **characterised in that** the operating evaluation device (5) generates a planting distance adjusting signal (35) as said adjustment signal (17).

12. Method according to claim 11, **characterised in that** the operating evaluation device (5) generates a speed adjusting signal (37) for adjusting the speed of a drive shaft (6) of the planting element (3) as said adjustment signal (17).

13. Computer program product, consisting of computer-readable code, which, when this code is executed on a control unit (4) of a planter (1) according to any of claims 1 to 7, this produces the result that the control unit (4) controls the operation of the planter (1) according to a method according to claim 8.

14. Non-transient machine-readable storage medium, which stores a computer program product according to claim 13.

15. Method for converting a planter (1) for planting seedlings, such as potatoes or other tuberous or bulbous plants, comprising a bunker (2) for keeping seedlings to be planted, a planting element (3) for planting these seedlings and a feed device (11) for feeding the seedlings from the bunker (2) to the planting element (3) **characterised in that** the planter (1) is provided with a weight measuring device (22) for recording a weight parameter (23) of the weight of seedlings to be planted in order to obtain a planter (1) according to any of claims 1 to 7.
